# FASCICULE DE BREVET EUROPEEN

(11) **EP 0 794 103 B1**
(45) Date de publication et mention de la délivrance du brevet: **02.10.2002**
(21) Numéro de dépôt: 97400420.2
(22) Date de dépôt: 26.02.1997
(51) Int. Cl.: B62D 1/18

(54) **Dispositif antirotation de corps de colonne de direction de véhicule automobile**
Vorrichtung zum Verhindern des Schwenkens des Lenksäulenkörpers eines Kraftfahrzeugs
Device for preventing rotation of the steering column body of a motor vehicle

(30) Priorité: 06.03.1996 FR 9603010
(43) Date de publication de la demande: 10.09.1997
(73) Titulaire: NACAM FRANCE SA, 41100 Vendôme (FR)
(72) Inventeur: Marzio, Emmanuel, 41100 Vendome (FR); Duval, Benoît, 41100 Vendome (FR); Laisement, André, 41290 La Chapelle Encherie (FR)
(74) Mandataire: Cabinet Martinet & Lapoux

(56) Documents cités:
- EP-A- 0 408 847
- EP-A- 0 529 769
- DE-A- 4 034 710

## Description

La présente invention se rapporte à un dispositif antirotation de colonne de direction de véhicule automobile, du type défini dans les préambules des revendications 1 et 2 et connu par exemple du document EP-A-0408847.

Les exigences de plus en plus sévères de protection du conducteur, en cas d'accident, et notamment en cas de choc frontal, ont amené les constructeurs à prévoir un système à coussin d'air de sécurité, plus communément appelé "AIR-BAG", qui se gonfle presque instantanément, lors d'un choc, afin de protéger le conducteur en recouvrant le volant. Les nouvelles normes de sécurité en cas de choc, exigent une tenue à une plus grande vitesse, tout en garantissant un niveau d'effort sur le conducteur ou le passager qui soit plus faible. De ce fait, les nouveaux "AIR-BAG" doivent être plus grands, ce qui fait que le point d'application du conducteur sur l'AIR-BAG en cas de choc a un désaxement plus important, ce qui entraîne un couple et des efforts transversaux qui sont plus élevés. Il est donc nécessaire, d'éviter toute rotation du corps de colonne de direction en cas de choc frontal. De plus, il est nécessaire d'éviter toute sensation de jeu au volant lorsque le conducteur appuie sur le volant dans un sens vertical, ce qui lui donne une impression non sécurisante.

Il existe des dispositifs de blocage, qui font appel à un double système vis écrou de sens opposé avec une tenue en rotation des vis comme dans la demande européenne EP-A-0408847. Ces dispositifs présentent l'inconvénient d'entraîner un certain débattement en rotation.

D'autres dispositifs comme la demande européenne EP-A-0341078 mettent en oeuvre un ensemble support en plusieurs éléments avec une seule glissière axiale de corps de colonne. Ces dispositifs ont le désavantage d'avoir une possibilité de débattement en rotation par rapport à l'élément fixe de l'ensemble support. Il se rencontre aussi des dispositifs comme ceux décrits dans la demande européenne EP-A-0529769, qui comportent un ensemble de blocage avec deux plateaux munis de stries et un ressort qui sont montés sur l'axe de serrage. Ces systèmes ont l'inconvénient d'avoir des stries de faible hauteur, qui doivent se retirer complètement des stries correspondantes du support et du corps de colonne pour permettre le réglage en position.

Le but de la présente invention est de proposer un dispositif antirotation de corps de colonne de direction, qui permette d'arrêter toute rotation du corps de colonne de direction durant un choc frontal, ou d'éviter toute sensation de jeu lorsque le conducteur appuie sur le volant, en permettant en cas de choc frontal ou d'effort par le conducteur un système de reprise de couple et de rattrapage de jeu. Ce but est atteint selon l'invention grâce aux caractéristiques définies dans les parties caractérisantes des revendications 1 et 2.

Selon l'invention, le dispositif antirotation de corps de colonne de direction de véhicule automobile comporte un élément support lié au châssis du véhicule et un corps, qui est maintenu en position par rapport à l'élément support au moyen d'un système de blocage. Le système antirotation comporte, pour le réglage de colonne considéré et dans une direction de réglage demandée, des faces de liaison agencées entre l'élément support, et le corps. Les faces de liaison ont une direction sensiblement parallèle à la direction de réglage demandée, de manière à ce que les faces de liaison coopèrent les unes avec les autres lors du blocage de la colonne de direction, afin d'assurer l'antirotation du corps de colonne, les faces de liaison restant engagées les unes dans les autres en position débloquée.

Selon des réalisations de l'invention, dans chaque paire de faces de liaison, les faces de liaison sont inclinées symétriquement l'une par rapport à l'autre.

Afin d'améliorer encore l'ensemble antirotation du dispositif, le dispositif comporte un élément de placage pour un ensemble de paires de faces de liaison. Cet élément de placage est disposé sur un axe du système de blocage, et à l'extérieur d'une face externe correspondante de l'élément support et est appliqué directement contre ladite face externe de l'élément support.

Afin d'améliorer encore la sécurité du dispositif antirotation selon l'invention, l'élément intermédiaire comporte deux butées intégrées à la face interne.

Dans le cas d'une colonne de direction réglable de façon uni-directionnelle dans le sens axial ou en profondeur, le dispositif de l'invention peut avoir notamment le mode de réalisation ci-après.

Dans ce mode de réalisation, l'élément support est en forme de U avec des ailes. Chaque aile comporte une paire de faces de liaison qui sont inclinées et coopèrent avec l'autre paire de faces de liaison inclinées agencées sur la portion latérale respective du carré de renfort appartenant au corps. Les faces de liaison sont orientées dans la direction du réglage en profondeur, et un élément de placage est disposé à l'extérieur de la face externe de l'aile respective de l'élément support.

Dans le cas d'une colonne de direction à réglage uni-directionnel angulaire ou en hauteur, il peut y avoir notamment selon l'invention le mode de réalisation ci-après.

Selon ce mode de réalisation, le dispositif antirotation a chaque aile de l'élément support est en forme de U avec des ailes. Chaque aile comporte une paire de faces de liaison qui sont inclinées et qui coopèrent avec l'autre paire de faces de liaison qui sont inclinées et agencées sur la portion latérale respective du carré de renfort appartenant au corps. Les faces de liaison sont orientées dans la direction du réglage en hauteur, et un élément de placage est disposé à l'extérieur de la face externe de l'aile respective de l'élément support.

Dans le cas où la colonne de direction est réglable de manière bi-directionnelle, c'est-à-dire dans le sens axial ou en profondeur et dans le sens angulaire ou en hauteur, il peut y avoir selon l'invention notamment le mode de réalisation ci-après.

Dans ce mode de réalisation, le dispositif antirotation comporte deux éléments intermédiaires disposés chacun entre l'une respective de deux ailes de l'élément support en U et la face externe de l'une respective de deux portions latérales d'un carré de renfort du corps. L'élément intermédiaire comporte sur la face interne deux faces de liaison inclinées coopérant avec deux faces de liaison inclinées agencées sur la portion latérale respective du carré de renfort, lesdites faces de liaison étant orientées dans la direction du réglage en profondeur. L'élément intermédiaire comporte sur la face externe deux faces de liaison inclinées par rapport à celle-ci et coopérant avec deux faces de liaison agencées de l'aile respective de l'élément support et inclinées par rapport à celle-ci. Les faces de liaison sont orientées dans la direction du réglage en hauteur. Chaque élément intermédiaire comporte deux butées intégrées à la face interne, et deux éléments de placage sont disposés à l'extérieur de faces externes des ailes de l'élément support respectivement.

Ainsi le système antirotation de corps de colonne de direction selon l'invention présente l'avantage d'arrêter en rotation le corps de colonne durant un choc frontal répondant aux nouvelles normes, et avec l'utilisation des nouveaux "AIR-BAG" de plus grand diamètre. Il garantit d'autre part d'éviter toute sensation de jeu au volant lorsque le conducteur appuie sur ce volant dans un sens vertical.

D'autres caractéristiques et avantages de l'invention ressortiront de la description qui va suivre, donnée à titre d'exemples nullement limitatifs, en référence aux dessins annexés sur lesquels :
- la figure 1 est une coupe transversale d'un dispositif antirotation de corps de colonne de direction suivant l'invention, à travers un axe du système de blocage ;
- la figure 2 est une coupe suivant le plan III-III de la figure 1 ;
- la figure 3 est une vue partielle de la figure 1 correspondant à une variante de réalisation ;
- la figure 4 représente en perspective cavalière un élément intermédiaire selon l'invention ;
- la figure 5 représente un montage d'un élément de placage selon l'invention ;
- la figure 6 est une coupe transversale analogue à la figure 1 d'un autre mode de réalisation de l'invention ;
- la figure 7 est une coupe suivant le plan X-X de la figure 6;
- la figure 8 est une coupe transversale analogue à la figure 1 d'un autre mode de réalisation de l'invention ;
- la figure 9 est une coupe suivant le plan XII-XII de la figure 8; et

Comme on peut le voir sur les différentes figures, le dispositif antirotation de corps de colonne de direction selon l'invention comporte un élément support 2 lié au châssis du véhicule, et un corps 1. Le corps 1 est maintenu en position par rapport à l'élément support 2 au moyen d'un système de blocage 3. Ce système de blocage comporte essentiellement un axe de blocage 8 qui est commandé par une poignée de manoeuvre 9.

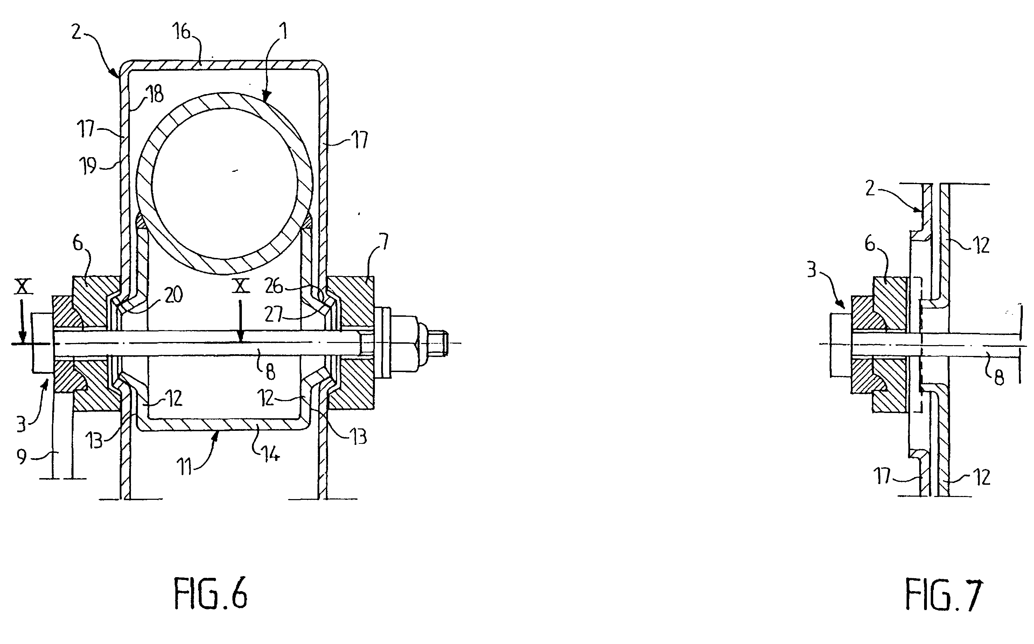

Le dispositif antirotation comporte, pour le réglage de colonnes considérées et dans la direction demandée, c'est-à-dire pour le réglage axial ou en profondeur ou pour le réglage vertical angulaire ou en hauteur, au moins une paire de faces de liaison raccordées au support, qui coopèrent avec une paire de faces de liaison raccordées au corps. Les faces de liaison, par exemple 26 et 27, comme dans le cas de la figure 6, ont une direction sensiblement parallèle à la direction de réglage demandée, et sont inclinées.

La structure des différentes réalisations de l'invention est agencée de manière à ce que les faces de liaison, par exemple 26, 27 ou 30, 31, coopèrent les unes avec les autres lors du blocage, afin d'assurer l'antirotation du corps de colonne de direction.

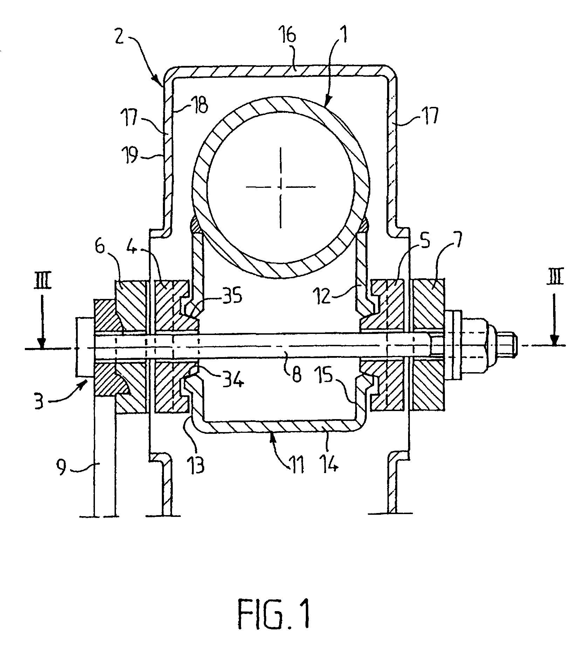

Dans les modes de réalisation de l'invention représentés sur les figures 1 à 5, le dispositif antiroration comporte un élément intermédiaire 4, 5 qui est disposé entre l'aile de l'élément support 2, et la face correspondante 13 du corps 1. L'élément intermédiaire 4, 5 comporte sur la face interne 21 côté corps 1 deux faces de liaison 34, qui coopèrent avec deux faces de liaison 35 sur ledit corps 1. Les faces de liaison 34 et 35 sont orientées dans la direction du réglage en profondeur. De plus l'élément intermédiaire 4, 5 comporte sur la face externe 22 côté de l'élément support 2, deux faces de liaison 36, qui coopèrent avec deux faces de liaison 37 sur ledit élément support 2. Les faces de liaison 36 et 37 sont orientées dans la direction du réglage en hauteur.

Dans un autre mode de réalisation non représenté sur les figures, le dispositif antirotation comporte un élément intermédiaire 4, 5 qui est disposé entre l'aile 17 de l'élément support 2, et la face correspondante 13 du corps 1. En se reportant à la figure 6, on aurait dans ce cas la face interne 22 qui comporterait les faces de liaison 36 orientées dans la direction du réglage en hauteur et la face externe 21 qui comporterait les faces de liaison 34 du réglage en profondeur. Dans ce cas, le dispositif antirotation selon l'invention comporte un élément intermédiaire 4, 5 qui est disposé entre l'aile 17 de l'élément support 2 et la face correspondante 13 du corps 1. L'élément intermédiaire 4, 5 comporte sur la face interne 22 côté corps deux faces de liaison 36 coopérant avec deux faces de liaison sur ledit corps. Les faces 36 sont orientées dans la direction du réglage en hauteur. L'élément intermédiaire 4, 5 comporte sur la face externe 21 côté élément support 2 deux faces de liaison 34, qui coopèrent avec deux faces de liaison sur ledit élément support, lesdites faces de liaison 34 étant orientées dans la direction du réglage en profondeur.

Dans le mode de réalisation représenté sur les figures 1, 2 et 4, chaque paire de faces de liaison 34, 35, 36 ou 37 a les deux faces de liaison qui sont parallèles inclinées symétriquement l'une par rapport à l'autre.

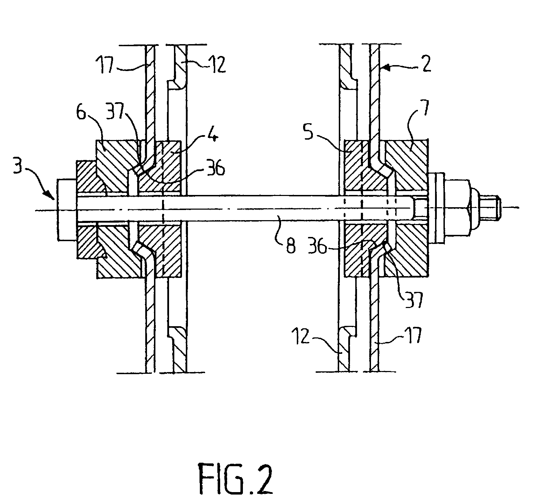

De plus comme on peut le voir sur les figures 2 et 5, le dispositif comporte des éléments de placage 6 et 7 disposés de chaque côté à l'extérieur des ailes 17 de l'élément support 2. Chaque élément de placage 6, 7 est associé à un ensemble de faces de liaison 36 et 37, et est disposé sur l'axe 8 du système de blocage 3 et à l'extérieur de la face externe 19 correspondante de l'élément support 2. Chaque élément de placage peut ainsi s'appliquer directement contre la partie externe 20 des faces de liaison 37 correspondantes dudit ensemble.

Dans une variante de réalisation, chaque élément de placage 6, 7 disposé pour un ensemble de faces de liaison 36 et 37 est également disposé sur l'axe du système de blocage 3 et à l'extérieur de la face externe 19 de l'aile correspondante de l'élément support 2, de manière à s'appliquer directement contre ladite face externe 19 de l'élément support 2.

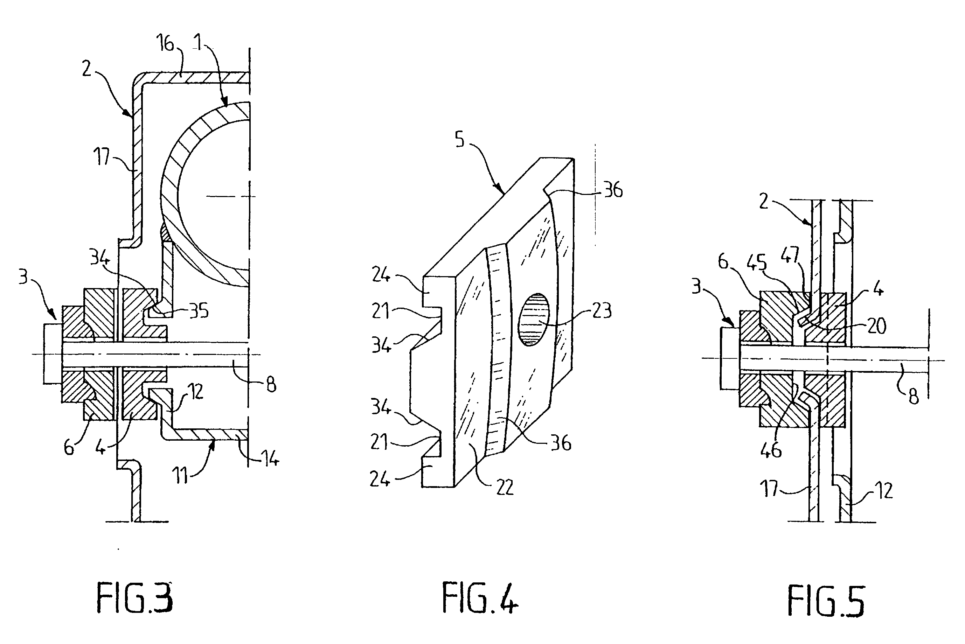

Comme on peut le voir sur les figures 1 et 4, l'élément intermédiaire comporte de plus deux butées 24 intégrées à la face 21, qui est munie des faces de liaison 34 orientées dans la direction du réglage en profondeur.

Dans le mode de réalisation des figures 1, 2, 4, et 5, le dispositif antirotation comporte deux éléments intermédiaires 4 et 5 qui sont disposés chacun entre l'une respective des deux ailes 17 de l'élément support 2 en U, et la face externe 13 de l'une respective de portions latérales 12 du carré de renfort 11 du corps 1. En effet, le carré de renfort 11 est solidaire du corps 1 et est constitué par les deux portions latérales 12 reliées par une portion de raccordement 14. Chaque élément intermédiaire 4, 5 comporte sur la face interne 21 deux faces de liaison 34 inclinées, qui coopèrent avec deux faces de liaison 35 inclinées sur la portion latérale 12 du carré de renfort 11. Les faces de liaison 34 et 35 sont orientées dans la direction du réglage en profondeur. Chaque élément intermédiaire 4, 5 porte sur la face externe 22 deux faces de liaison 36 inclinées, qui coopèrent avec deux faces de liaison inclinées 37 sur l'aile 17 correspondante de l'élément support 2. Les faces de liaison 36 et 37 sont orientées dans la direction du réglage en hauteur. Chaque élément intermédiaire 4, 5 comporte de plus deux butées 24 intégrées à la face interne 21. Les éléments de placage 6 et 7 sont disposés respectivement sur les côtés de dispositif, à l'extérieur des faces externes 19 des ailes 17 de l'élément support 2.

Comme on peut le voir sur la figure 3 qui représente une variante de réalisation de l'élément intermédiaire 4 ou 5, les faces de liaison 34 appartenant à l'élément intermédiaire ont un profil femelle, tandis que les faces de liaison 35 appartenant à la portion latérale 12 du carré de renfort 11 ont un profil mâle. Cette variante de réalisation peut aussi être appliquée pour les colonnes de direction réglables d'une manière uni-directionnelle qui vont être décrites dans la suite de l'exposé. Ainsi, les profils des faces de liaison conjuguées peuvent être mâle ou femelle suivant les différentes variantes de réalisation.

Le mode de réalisation représenté sur les figures 6 et 7 se rapporte à une colonne de direction réglable de façon unidirectionnelle dans le sens de la profondeur.

Sur les figures 6 et 7, chaque aile 17 de l'élément support 2 en U comporte une paire de faces de liaison inclinées 26, qui coopèrent avec une paire de faces de liaison inclinées 27 sur chaque portion latérale 12 du carré de renfort 11 appartenant au corps 1. Les faces de liaison 26 et 27 sont orientées dans la direction du réglage en profondeur. Des éléments de placage 6 et 7 sont disposés respectivement sur les côtés du dispositif, à l'extérieur des faces externes 19 des ailes 17 de l'élément support 2.

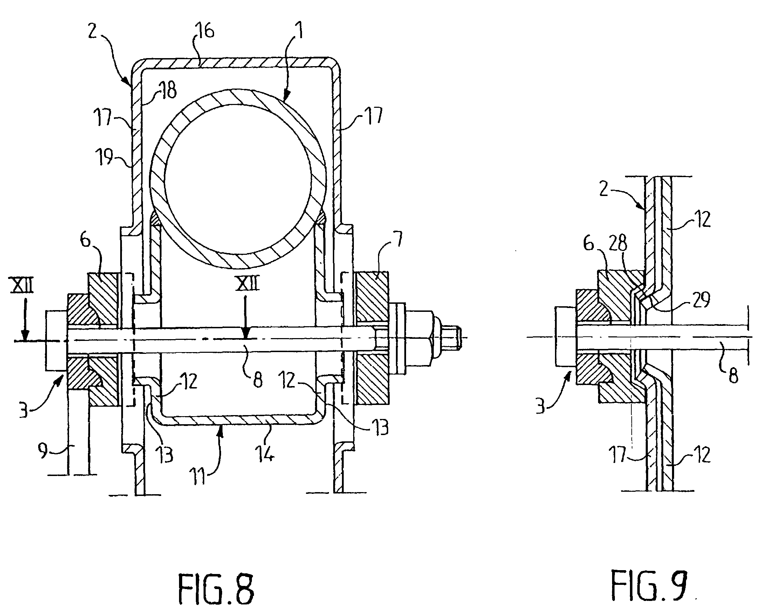

Dans le cas des figures 8 et 9, le dispositif antirotation s'applique à une colonne de direction réglable de façon unidirectionnelle dans le sens angulaire ou en hauteur.

Dans le cas des figures 8 et 9, chaque aile 17 de l'élément support 2 en U comporte une paire de faces de liaison inclinées 28, qui coopèrent avec une paire de faces de liaison inclinées 29 sur la portion latérale respective 12 du carré de renfort 11 du corps 1. Les faces de liaison 28 et 29 sont orientées dans la direction du réglage en hauteur. Des éléments de placage 6 et 7 sont disposés respectivement à l'extérieur des faces externes 19 des ailes 17 de l'élément support 2.

Comme il apparaît de façon évidente sur les différentes figures, les faces de liaison restent engagées les unes dans les autres en position débloquée pour le réglage en position du corps de colonne de direction.

## Revendications

1. Dispositif antirotation de corps de colonne de direction de véhicule automobile comportant un élément support (2) comportant deux ailes (17) et lié au châssis du véhicule et un corps (1), qui est maintenu en position par rapport à l'élément support au moyen d'un système de blocage (3), ledit dispositif antirotation comportant, pour le réglage de colonne considéré et dans une direction de réglage demandée, en profondeur ou en hauteur, des faces de liaison qui sont aménagées entre l'élément support (2) et le corps (1), lesdites faces de liaison ayant une direction sensiblement parallèle à la direction de réglage demandée, **caractérisé en ce qu'**il comporte :
- deux éléments intermédiaires (4 et 5) , chacun des deux éléments intermédiaires (4 et 5) étant disposé entre Tune des deux ailes (17) de l'élément support (2) et une face correspondante (13) du corps (1),
- chaque élément intermédiaire (4, 5) comportant sur une face interne (21) situé du côté du corps (1) un ensemble de deux faces de liaison (34) coopérant avec un ensemble de deux faces de liaison (35) agencées sur une portion latérale correspondante (12) d'un carré de renfort (11) appartenant au corps (1), lesdites faces de liaison (34, 35) étant orientées dans Tune des deux directions de réglage en profondeur ou en hauteur ;
- chaque élément intermédiaire (4, 5) comportant sur une face externe (22) situé du côté de l'élément support (2) un ensemble de deux faces de liaison (36) coopérant avec un ensemble de deux faces de liaison (37) agencées sur l'aile correspondante (17) de 1'élément support (2), lesdites faces de liaison (36, 37) étant orientées dans l'autre direction de réglage en hauteur ou en profondeur ;
- les faces de liaison (34) prévues sur la face interne (21) étant inclinées par rapport à ladite face interne (21) ; les faces de liaison (36) prévues sur la face externe (22) étant inclinées par rapport à ladite face externe (22) ; les faces de liaison (35) agencées sur la portion latérale (12) du corps (1) étant inclinées par rapport audit élément latéral (12) ; les faces de liaison (37) agencées sur l'aile (17) de l'élément support (2) étant inclinées par rapport à ladite aile (17) ;
- de manière à ce que les faces de liaison (34,35 - 36,37) coopèrent les unes avec les autres lors du blocage de la colonne de direction, afin d'assurer l'antirotation du corps de colonne, les faces de liaison (34, 35 - 36, 37) restant engagées les unes dans les autres en position débloquée.

2. Dispositif antirotation de corps de colonne de direction de véhicule automobile comportant un élément support (2) lié au châssis du véhicule et un corps (1), qui est maintenu en position par rapport à l'élément support au moyen d'un système de blocage (3), ledit dispositif antirotation comportant, pour le réglage de colonne considéré et dans une direction de réglage demandée, en profondeur ou en hauteur, des faces de liaison qui sont aménagées entre l'élément support (2) et le corps (1), lesdites faces de liaison ayant une direction sensiblement parallèle à la direction de réglage demandée, l'élément support (2) étant en forme de U avec deux ailes (17), **caractérisé en ce que** chaque aile (17) comporte un ensemble de deux faces de liaison (26 ou 28) qui sont inclinées par rapport à ladite aile (17) et qui coopèrent avec un ensemble de deux faces de liaison (27 ou 29) qui sont agencées sur une portion latérale correspondante (12) d'un carré de renfort (11) appartenant au corps (1), et qui sont inclinées par rapport audit élément latéral (12) correspondant ; les faces de liaison (26,27 ou 28,29) étant orientées dans la direction du réglage en profondeur ou en hauteur demandée ;
- de manière à ce que les faces de liaison (26,27 - 28,29) coopèrent les unes avec les autres lors du blocage de la colonne de direction, afin d'assurer l'antirotation du corps de colonne, les faces de liaison (26,27 - 28,29) restant engagées les unes dans les autres en position débloquée.

3. Dispositif antirotation selon la revendication 1 ou 2, **caractérisé en ce que** chaque groupe de deux faces de liaison (26,27 - 28,29 - 34,35 - 36,37) a les deux faces de liaison qui sont inclinées symétriquement l'une par rapport à l'autre.

4. Dispositif antirotation selon l'une quelconque des revendications 1 à 3, **caractérisé en ce qu'**il comporte deux éléments de placage (6, 7) chaque élément de placage (6, 7) étant disposé sur un axe (8) du système de blocage (3) et à l'extérieur dune face externe (19) correspondante de l'élément support (2).

5. Dispositif antirotation selon la revendication 4, **caractérisé en ce que** chaque élément de placage (6, 7) est disposé de manière à s'appliquer directement contre la face externe (19) correspondante de l'élément de support (2).

6. Dispositif antirotation selon la revendication 1, **caractérisé en ce que** chaque élément intermédiaire (4, 5) comporte deux butées (24) intégrées à la face interne (21).

## Patentansprüche

1. Vorrichtung zum Verhindern des Schwenkens des Lenksäulenkörpers eines Kraftfahrzeugs, umfassend ein Trägerelement (2), das zwei Flügel (17) umfaßt und mit der Karosserie des Fahrzeugs verbunden ist, und einen Körper (1), der in bezug auf das Trägerelement mittels eines Sperrsystems (3) in der Position gehalten wird, wobei die Schwenkverhinderungsvorrichtung zur Tiefen- oder Höheneinstellung der betrachteten Säule und in einer geforderten Einstellrichtung Verbindungsseiten umfaßt, die zwischen dem Trägerelement (2) und dem Körper (1) angeordnet sind, wobei die Verbindungsseiten eine Richtung im wesentlichen parallel zur geforderten Einstellrichtung aufweisen, **dadurch gekennzeichnet, daß** sie umfaßt:
- zwei Zwischenelemente (4 und 5), wobei jedes der beiden Zwischenelemente (4 und 5) zwischen einem der beiden Flügel (17) des Trägerelements (2) und einer entsprechenden Seite (13) des Körpers (1) vorgesehen ist,
- wobei jedes Zwischenelement (4, 5) auf einer auf der Seite des Körpers (1) liegenden Innenseite (21) einen Satz von zwei Verbindungsseiten (34) umfaßt, die mit einem Satz von zwei Verbindungsseiten (35) zusammenwirken, die auf einem entsprechenden Seitenabschnitt (12) eines zum Körper (1) gehörenden Versteifungsvierkants (11) angeordnet sind, wobei die Verbindungsseiten (34, 35) in einer der beiden Tiefen- oder Höheneinstellrichtungen orientiert sind;
- wobei jedes Zwischenelement (4, 5) auf einer auf der Seite des Trägerelements (2) liegenden Außenseite (22) einen Satz von zwei Verbindungsseiten (36) umfaßt, die mit einem Satz von zwei Verbindungsseiten (37) zusammenwirken, die auf dem entsprechenden Flügel (17) des Trägerelements (2) angeordnet sind, wobei die Verbindungsseiten (36, 37) in der anderen Höhen- oder Tiefeneinstellrichtung orientiert sind;
- wobei die auf der Innenseite (21) vorgesehenen Verbindungsseiten (34) in bezug auf die Innenseite (21) geneigt sind; wobei die auf der Außenseite (22) vorgesehenen Verbindungsseiten (36) in bezug auf die Außenseite (22) geneigt sind; wobei die auf dem Seitenabschnitt (12) des Körpers (1) angeordneten Verbindungsseiten (35) in bezug auf das Seitenelement (12) geneigt sind; wobei die auf dem Flügel (17) des Trägerelements (2) angeordneten Verbindungsseiten (37) in bezug auf den Flügel (17) geneigt sind;
- derart, daß die Verbindungsseiten (34, 35 - 36, 37) zur Zeit der Sperrung der Lenksäule miteinander zusammenwirken, um die Verhinderung des Schwenkens des Säulenkörpers sicherzustellen, wobei die Verbindungsseiten (34, 35 - 36, 37) in der entsperrten Position miteinander in Eingriff bleiben.

2. Vorrichtung zur Verhinderung des Schwenkens des Lenksäulenkörpers eines Kraftfahrzeugs, umfassend ein mit der Karosserie des Fahrzeugs verbundenes Trägerelement (2) und einen Körper (1), der in bezug auf das Trägerelement mittels eines Sperrsystems (3) in der Position gehalten wird, wobei die Schwenkverhinderungsvorrichtung für die Tiefen- oder Höheneinstellung der betrachteten Säule und in einer geforderten Einstellrichtung Verbindungsseiten umfaßt, die zwischen dem Trägerelement (2) und dem Körper (1) angeordnet sind, wobei die Verbindungsseiten eine Richtung im wesentlichen parallel zur geforderten Einstellrichtung aufweisen, wobei das Trägerelement (2) in Form eines U mit zwei Flügeln (17) vorhanden ist, **dadurch gekennzeichnet, daß** jeder Flügel (17) einen Satz von zwei Verbindungsseiten (26 oder 28) umfaßt, die in bezug auf den Flügel (17) geneigt sind und die mit einem Satz von zwei Verbindungsseiten (27 oder 29) zusammenwirken, die auf einem entsprechenden Seitenabschnitt (12) eines zum Körper (1) gehörenden Versteifungsvierkants (11) angeordnet sind und die in bezug auf das entsprechende Seitenelement (12) geneigt sind; wobei die Verbindungsseiten (26, 27 oder 28, 29) in der geforderten Tiefen- oder Höheneinstellrichtung orientiert sind;
- derart, daß die Verbindungsseiten (26, 27 - 28, 29) zur Zeit der Sperrung der Lenksäule miteinander zusammenwirken, um die Verhinderung eines Schwenkens des Säulenkörpers sicherzustellen, wobei die Verbindungsseiten (26, 27 - 28, 29) in der entsperrten Position miteinander in Eingriff bleiben.

3. Schwenkverhinderungsvorrichtung nach Anspruch 1 oder 2, **dadurch gekennzeichnet, daß** jede Gruppe von zwei Verbindungsseiten (26, 27 - 28, 29 - 34, 35 - 36, 37) zwei Verbindungsseiten aufweist, die in bezug aufeinander symmetrisch geneigt sind.

4. Schwenkverhinderungsvorrichtung nach einem beliebigen der Ansprüche 1 bis 3, **dadurch gekennzeichnet, daß** sie zwei Auflageelemente (6, 7) umfaßt, wobei jedes Auflageelement (6, 7) auf einer Achse (8) des Sperrsystems (3) und außerhalb einer entsprechenden Außenseite (19) des Trägerelements (2) vorgesehen ist.

5. Schwenkverhinderungsvorrichtung nach Anspruch 4, **dadurch gekennzeichnet, daß** jedes Auflageelement (6, 7) vorgesehen ist derart, daß es direkt zur Auflage gegen die entsprechende Außenseite (19) des Trägerelements (2) gelangt.

6. Schwenkverhinderungsvorrichtung nach Anspruch 1, **dadurch gekennzeichnet, daß** jedes Zwischenelement (4, 5) zwei in die Innenseite (21) integrierte Anschläge (24) umfaßt.

## Claims

1. A device for preventing rotation of the steering column body of an automobile vehicle comprising a support member (2) including two flanges (17) and attached to a chassis of the vehicle and a body (1), which is held in position relative to the support member by means of a locking system (3), said rotation preventing device comprising, for the adjustment of said column in a required depthwise or heightwise adjustment direction, coupling surfaces which are arranged between the support member (2) and the body (1), said coupling surfaces having a direction substantially parallel to the required adjustment direction, **characterized in that** it comprises :
- two intermediate members (4 and 5), each of the two intermediate members (4 and 5) being disposed between one of the two flanges (17) of the support member (2) and a corresponding face (13) of the body (1),
- each intermediate member (4, 5) comprising on an inside face (21) on the same side as the body (1) a pair of coupling surfaces (34) cooperating with a pair of coupling surfaces (35) on the corresponding lateral portion (12) of a reinforcing square (11) belonging to the body (1), said coupling surfaces (34, 35) being oriented in one of the two directions of depthwise or heightwise adjustment ;
- each intermediate member (4, 5) comprising, on an outside face (22) on the same side as the support member (2), a pair of coupling surfaces (36) cooperating with a pair of coupling surfaces (37) on the corresponding flange (17) of the support member (2), said coupling surfaces (36, 37) being oriented in the other direction of heightwise or depthwise adjustment ;
- the coupling surfaces (34) provided on the inside face (21) being inclined relative to said inside face (21) ; the coupling surfaces (36) provided on the outside face (22) being inclined relative to said outside face (22) ; the coupling surfaces (35) on the lateral portion (12) of the body (1) being inclined relative to said lateral portion (12) ; the coupling surfaces (37) on the flange (17) of the support member (2) being inclined relative to said flange (17) ;
- so that the coupling surfaces (34,35 - 36,37) cooperate together when the steering column is being locked in order to prevent rotation of the column body, the coupling surfaces (34,35 - 36,37) remaining engaged with each other in the unlocked position.

2. A device for preventing rotation of the steering column body of an automobile vehicle comprising a support member (2) attached to a chassis of the vehicle and a body (1), which is held in position relative to the support member by means of a locking system (3), said rotation preventing device comprising, for the adjustment of said column in a required depthwise or heightwise adjustment direction, coupling surfaces which are arranged between the support member (2) and the body (1), said coupling surfaces having a direction substantially parallel to the required adjustment direction, the support member (2) being of U-shape with two flanges (17), **characterized in that** each flange (17) comprises a pair of coupling surfaces (26 or 28) which are angularly oriented relative to said flange (17) and which cooperate with a pair of coupling surfaces (27 or 29) on the corresponding lateral portion (12) of a reinforcing square (11) belonging to the body (1), and which are angularly oriented relative to the corresponding lateral member (12) ; coupling surfaces (26,27 or 28,29) being oriented in the requested depthwise or heightwise adjustment direction ;
- so that the coupling surfaces (26,27 - 28,29) cooperate together when the steering column is being locked in order to prevent rotation of the column body, the coupling surfaces (26,27 - 28,29) remaining engaged with each other in the unlocked position.

3. A rotation preventing device according to claim 1 or 2, **characterized in that** each pair of coupling surfaces (26,27 - 28,29 - 34,35 - 36,37) has the two coupling surfaces which are inclined symmetrically to each other.

4. A rotation preventing device according to any one of claims 1 to 3, **characterized in that** it comprises two facing members (6, 7), each facing member (6, 7) being disposed on a pin (8) of the locking system (3) and outside a corresponding outside face (19) of the support member (2).

5. A rotation preventing device according to claim 4, **characterized in that** each facing member (6, 7) is disposed to be applied directly against the corresponding outside face (19) of the support member (2).

6. A rotation preventing device according to claim 1, **characterized in that** each intermediate member (4, 5) comprises two abutments (24) integral with the inside face (21).
